# EUROPEAN PATENT SPECIFICATION

(11) **EP 1 449 873 B1**
(45) Date of publication and mention of the grant of the patent: **01.08.2007**
(21) Application number: 02800015.6
(22) Date of filing: 26.09.2002
(51) Int. Cl.: C08L 9/02, C08L 15/00, C08K 5/14, C08F 279/00, C08F 220/18, C08C 19/02

(54) **RUBBER COMPOSITION COMPRISING NITRILE COPOLYMER RUBBER, METAL SALT OF ETHYLENICALLY UNSATURATED CARBOXYLIC ACID, AND ORGANIC PEROXIDE, AND VULCANIZATE THEREOF**
NITRILCOPOLYMERKAUTSCHUK, METALLSALZ EINER ETHYLENISCH UNGESÄTTIGTEN CARBONSÄURE UND ORGANISCHES PEROXID ENTHALTENDE KAUTSCHUKZUSAMMENSETZUNG UND VULKANISAT DAVON
MELANGE CAOUTCHOUTE COMPRENANT DU CAOUTCHOUC COPOLYMERE DE NITRILE, UN SEL METALLIQUE D'ACIDE CARBOXYLIQUE INSATURE EN ETHYLENE, DU PEROXYDE ORGANIQUE, ET VULCANISAT DUDIT MELANGE

(30) Priority: 28.09.2001 JP 2001299279
(43) Date of publication of application: 25.08.2004
(73) Proprietor: ZEON CORPORATION, Chiyoda-ku Tokyo 100-8323 (JP)
(72) Inventor: TSUKADA, Akira, Chiyoda-ku, Tokyo 100-8323 (JP); FUJITA, Shigeru, Chiyoda-ku, Tokyo 100-8323 (JP)
(74) Representative: Albrecht, Thomas
(86) International application number: PCT/JP2002/009963
(87) International publication number: WO 2003/029341

(56) References cited:
- JP-A- 1 311 158
- JP-A- 4 004 240
- JP-A- 6 145 423
- JP-A- 9 241 436
- JP-A- 2001 114 940

## Description

Rubber Composition Comprising Nitrile Group-Containing Copolymer Rubber, Metal Salt of Ethylenically Unsaturated Carboxylic Acid and Organic Peroxide, and Vulcanizate Thereof

### Technical Field

This invention relates to a rubber composition, and a vulcanizate made therefrom which has good cold resistance and oil resistance, and reduced compression set

### Background Art

A vulcanizate of a nitrile group-containing copolymer rubber having a low proportion of unsaturated bonds in the main chain has good heat resistance, oil resistance and ozone resistance, and therefore, is widely used in various fields (Japanese Unexamined Patent Publication No. H2-109449) However, there is an increasing demand in recent years for giving enhanced cold resistance and reduced compression set to the vulcanizate of a nitrite group-containing copolymer rubber.

To enhance the cold resistance, an improved nitrile group-containing copolymer rubber has been proposed in Japanese Unexamined Patent Publication No. 2001-114940 which comprises 10 to 40% by weight of (a) α, β-ethylenically unsaturated nitrile monomer units, 10 to 60% by weight of (b) α,β-ethylenically unsaturated carboxylic acid ester monomer units, 0.01 to 56% by weight of (c) conjugated diene monomer units, and 14 to 69.99% by weight of (d) saturated conjugated diene monomer units; the difference between the extrapolated glass transition initiation temperature (Tig) and the extrapolated glass transition ending temperature (Teg) as measured on the copolymer rubber (A) by differential scanning calorimetry is not larger than 10°C.

It is known that the tenacity of a nitrile group-containing copolymer rubber having a reduced proportion of unsaturated bonds and having incorporated therein an organic peroxide can be enhanced by the addition of a metal salt of an α,β-ethylenically unsaturated carboxylic acid in the nitrile group-containing copolymer rubber(Japanese Unexamined Patent Publication No. S63-270753). However, the addition of a metal salt of an α, β-ethylenically unsaturated carboxylic acid in the nitrile group-containing copolymer rubber causes a problem such that a vulcanizate made from the metal salt-added nitrile group-containing copolymer rubber exhibits an undesirably increased compression set. Thus, a metal salt of α,β ethylenically unsaturated carboxylic acid has been widely recognized as not suitable as an additive for improving the properties of a nitrile group-containing copolymer rubber having a reduced proportion of unsaturated bonds.

JP-A-1 311 158 and JP-A-4 004 240 describe the addition of an ethylenically unsaturated carboxylic acid metal salt into a curable nitrile group-containing rubber composition. However, the purpose of the addition of the metal salt is not improvement of compression but improvement of strength.

JP-A-9 241 436 discloses a curable rubber composition comprising (a) 100 parts by weight of a polymer ingredient comprising 10-40% by weight of an ethylenically unsaturated nitrile-conjugated diene highly saturated copolymer rubber wherein the content of conjugated diene units in the polymer chain is not larger than 30% by weight, and 90-60% by weight of an ethylene-α-olefin copolymer rubber; (b) 10-80 parts by weight of a metal salt of an ethylenically unsaturated carboxylic acid; (c) 0.2-10 parts by weight of an organic peroxide; and (d) 20-80 parts by weight of silica having a nitrogen-adsorption specific surface area, as determined by BET method, of 50-400 m²/g.

JP-A-6 145 423 discloses a rubber composition comprising (a) an ethylenically unsaturated nitrile-conjugated diene highly saturated copolymer rubber containing not more than 25% by weight of conjugated diene units, (b) an organic peroxide, and (c) a basic divalent metal salt of ethylenically unsaturated carboxylic acid. This rubber composition gives a rubber vulcanizate having reduced moisture absorption and with properties exhibiting reduced variation depending upon the moisture absorption.

### Disclosure of the Invention

An object of the present invention is to provide a rubber composition giving a vulcanizate having improved cold resistance and oil resistance, and a reduced compression set.

To achieve the above-mentioned object, the present inventors made extensive researches, and found that, in the case when a metal salt of α,β-ethylenically unsaturated carboxylic acid is added to a combination of a specific nitrile group-containing copolymer rubber having a reduced proportion of unsaturated bonds with an organic peroxide, the resulting rubber composition surprisingly gives a vulcanizate having improved cold resistance and oil resistance, and a reduced compression set.

Thus, in accordance with the present invention, there is provided a rubber composition comprising (A) a nitrile group-containing copolymer rubber, (B) a metal salt of an ethylenically unsaturated carboxylic acid and (C) an organic peroxide, wherein the nitrile group-containing copolymer rubber (A) comprises 10 to 40% by weight of (a) α, β-ethylenically unsaturated nitrile monomer units, 10 to 60% by weight of (b) α,β-ethylenically unsaturated carboxylic acid ester monomer units, 0.01 to 56% by weight of (c) conjugated diene monomer units, and 14 to 69.99% by weight of (d) saturated conjugated diene monomer units; the sum of the monomer units (c) and the monomer units (d) is 20 to 70% by weight, and the ratio of the monomer units (d) to the sum of the monomer units (c) and the monomer units (d) is at least 70% by weight; the difference between the extrapolated glass transition initiation temperature (Tig) and the extrapolated glass transition ending temperature (Teg) as measured on said nitrile group-containing copolymer rubber (A) by differential scanning calorimetry is not larger than 10°C.

In accordance with the present invention, there is further provided a vulcanizate obtained by vulcanizing the above-mentioned rubber composition.

### Best Mode for Carrying Out the Invention

The nitrile group-containing copolymer rubber used in the present invention (which rubber is hereinafter abbreviated to as "rubber (A)") comprises 10 to 40% by weight of (a) α,β ethylenically unsaturated nitrile monomer units, 10 to 60% by weight of (b) α,β-ethylenically unsaturated carboxylic acid ester monomer units, 0.01 to 56% by weight of (c) conjugated diene monomer units, and 14 to 69.99% by weight of (d) saturated conjugated diene monomer units, wherein the sum of the monomer units (c) and the monomer units (d) is 20 to 70% by weight, and the ratio of the monomer units (d) to the sum of the monomer units (c) and the monomer units (d) is at least 70% by weight; and the difference between the extrapolated glass transition initiation temperature (Tig) and the extrapolated glass transition ending temperature (Teg) as measured on the nitrile group-containing copolymer rubber (A) by differential scanning calorimetry is not larger than 10°C.

As specific examples of the α,β-ethylenically unsaturated nitrile monomer (hereinafter abbreviated to as "monomer (1)" when appropriate), there can be mentioned acrylonitrile; α-halogenoacrylonitriles such as a -chloroacrylonitrile and α-bromoacrylonitrile; and α -alkylacrylonitriles such as methacrylonitrile and ethacrylonitrile. Of these, acrylonitrile is preferable

The content of α, β -ethylenically unsaturated nitrile monomer units (a) (hereinafter abbreviated to as "monomer units (a)" when appropriate) in rubber (A) is in the range of 10 to 40% by weight, preferably 12 to 35% by weight and more preferably 15 to 30% by weight. When the content of monomer units (a) is too small, the resulting vulcanizate has a poor oil resistance In contrast, when the content of monomer units (a) is too large, the resulting vulcanizate has a poor cold resistance.

As specific examples of the α,β-ethylenically unsaturated carboxylic acid ester monomer (hereinafter abbreviated to as "monomer (2)" when appropriate), there can be mentioned acrylates having an alkyl group with 1 to 18 carbon atoms such as methyl acrylate, ethyl acrylate, n-dodecyl acrylate and butyl acrylate; acrylates having an alkoxyalkyl group with 2 to 18 carbon atoms such as methoxymethyl acrylate and methoxyethyl acrylate; acrylates having a cyanoalkyl group with 2 to 18 carbon atoms such as α-cyanoethyl acrylate, β -cyanoethyl acrylate and cyanobutyl acrylate; acrylates having a hydroxyalkyl group with 1 to 18 carbon atoms such as 2-hydroxyethyl acrylate and hydroxypropyl acrylate; acrylates having an aminoalkyl group with 1 to 18 carbon atoms such as dimethylaminomethyl acrylate and diethylaminoethyl acrylate; acrylates having a fluoroalkyl group with 1 to 18 carbon atoms such as trifluoroetyl acrylate and tetrafluoropropyl acrylate; methacrylates having an alkyl group with 1 to 18 carbon atoms such as methyl methacrylate, ethyl methacrylate, n-dodecyl methacrylate and butyl methacrylate; methacrylates having an alkoxyalkyl group with 2 to 18 carbon atoms such as methoxymethyl methacrylate and methoxyethyl methacrylate; methacrylates having a cyanoalkyl group with 2 to 18 carbon atoms such as a -cyanoethyl methacrylate, β-cyanoethyl methacrylate and cyanobutyl methacrylate; methacrylates having a hydroxyalkyl group with 1 to 18 carbon atoms such as 2-hydroxyethyl methacrylate and hydroxypropyl methacrylate ; methacrylates having an aminoalkyl group with 1 to 18 carbon atoms such as dimethylaminomethyl methacrylate and diethylaminoethyl methacrylate; methacrylates having a fluoroalkyl group With 1 to 18 carbon atoms such as trifluoroetyl methacrylate and tetrafluoropropyl methacrylate; and monoalkyl esters and dialkyl esters of an unsaturated dicarboxylic acid, wherein the monoalkyl group or each of the dialkyl groups has 1 to 18 carbon atoms, such as monoethyl maleate, dimethyl maleate, dimethyl fumarate, dimethyl itaconate, n-butyl itaconate and diethyl itaconate. Of these, acrylates having an alkyl group and methacrylates having an alkyl group are preferable. Butyl acrylate is especially preferable.

The content of α, β-ethylenically unsaturated carboxylic acid ester monomer units (b) (hereinafter abbreviated to as "monomer units (b)" when appropriate) in rubber (A) is in the range of 10 to 60% by weight, preferably 15 to 55% by weight and more preferably 20 to 45% by weight. When the content of monomer units (b) is too small, the resulting vulcanizate has a poor cold resistance. In contrast, when the content of monomer units (b) is too large, the resulting vulcanizate has poor oil resistance and dynamic properties.

As specific examples of the conjugated diene monomer (hereinafter abbreviated to as monomer (3)" when appropriate), there can be mentioned 1,3-butadiene, isoprene, 2,3-dimethyl-1,3-butadiene and 1,3-pentadiene. Of these, 1,3-butadiene is preferable.

The content of conjugated diene monomer units (c) (hereinafter abbreviated to as monomer units (c)" when appropriate) in rubber (A) is in the range of 0.01 to 56% by weight, preferably 0.05 to 35% by weight and more preferably 0.1 to 20% by weight. When the content of monomer units (c) is too small, the resulting rubber composition is difficult to vulcanize, and the resulting vulcanizate has a poor mechanical strength. In contrast, when the content of monomer units (c) is too large, the resulting vulcanizate has poor heat resistance.

The saturated conjugated diene monomer units (d) (hereinafter abbreviated to as "monomer units (d)" when appropriate) contained in rubber (A) used in the present invention have a structure such that carbon-carbon double bonds in monomer units (c) are saturated by hydrogenation.

The content of monomer units (d) in rubber (A) is in the range of 14 to 69.99% by weight, preferably 35 to 69.95% by weight and more preferably 50 to 69.9% by weight. When the content of monomer units (d) is too small, the resulting vulcanizate has a poor heat resistance. In contrast, when the content of monomer units (d) is too large, the resulting vulcanizate has poor dynamic properties and a large compression set.

The total content of monomer units (c) plus monomer units (d) in rubber (A) is in the range of 20 to 70% by weight, preferably 25 to 65% by weight and more preferably 35 to 60% by weight. When the total content of monomer units (c) plus monomer units (d) is too small, the resulting vulcanizate has poor dynamic properties. In contrast, when the total content of monomer units (c) plus monomer units (d) is too large, the resulting vulcanizate has poor cold resistance and oil resistance.

The ratio of monomer units (d) to the sum of monomer units (c) and monomer units (d) is at least 70% by weight, preferably at least 75% by weight and more preferably at least 80% by weight. When the ratio of monomer units (d) to the sum of monomer units (c) and monomer units (d) is too small, the resulting vulcanizate has a poor heat resistance.

The number average molecular weight of rubber (A) is not particularly limited, but is preferably in the range of 10,000 to 2, 000, 000, more preferably 30,000 to 1, 500, 000 and especially preferably 50,000 to 1,000,000, as measured by gel permeation chromatography and as expressed in terms of polystyrene. When the number average molecular weight is too small, rubber (A) has too low viscosity and the resulting vulcanizate tends to be poor in tensile strength and other mechanical strengths. In contrast, when the number average molecular weight is too large, rubber (A) has too large viscosity and the resulting vulcanizate tends to have poor processability.

Rubber (A) has a difference (ΔT) between the extrapolated glass transition initiation temperature (Tig) and the extrapolated glass transition ending temperature (Teg) of not larger than 10°C, preferably not larger than 8°C and more preferably not larger than 7°C. The extrapolated glass transition initiation temperature and the extrapolated glass transition ending temperature are measured by differential scanning calorimetry according to JIS K7121 "Method of Measuring Transition Temperatures of Plastic Materials". When the glass transition temperature difference (ΔT) is too large, the resulting vulcanizate has poor dynamic properties.

Each of monomer units (a), monomer units (b) monomer units (c), and the sum of monomer units (c) plus monomer units (d) in rubber (A) preferably has a compositional distribution width of not larger than 20% by weight, more preferably not larger than 15% by weight, and especially preferably not larger than 10% by weight. When the compositional distribution width is too large, the above-mentioned glass transition temperature difference (Δ T) tends to becomes too large. By the term "compositional distribution width" as herein used, we mean the ratio [S/(S' -S")] of the content (S) of specified monomer units in rubber (A) to the difference (S'-S") between the maximum content (S') of the specified monomer units and the minimum content (S") of the specified monomer units among minute portions of rubber (A). The contents of monomer units (a), monomer units (b), monomer units (c) and monomer (d) can be determined by appropriately combining a plurality of methods which are selected from a nitrogen content-determining method using a semi-micro Kjeldahl method, an unsaturated bond content-determining method using infrared spectrophotometry or iodine value-determining method, and methods of determining partial structures and determining content ratios, for example, by analyses such as infrared spectrophotometry, H-NMR, ¹³C-NMR and thermal decomposition gas chromatography. In general, methods of determining partial structures and determining content ratios by H-NMR are most reliable, but, in some cases, the analysis by these methods is difficult because a plurality of peaks lie upon another in an H-NMR chart, and therefore, H-NMR is preferably adopted in combination with other analyzing methods.

Rubber (A) used in the present invention has a small glass transition temperature difference (ΔT), and the respective monomer units have a small compositional distribution width, and thus, rubber (A) has characteristics different from those of the conventional nitrile group-containing copolymer rubbers having a reduced number of unsaturated bonds in the main chain. For this reason, it is presumed that, when a metal salt of an ethylenically unsaturated carboxylic acid is incorporated in a rubber composition comprising rubber (A), a rubber vulcanizate made from the rubber composition exhibits beneficial properties, namely improved cold resistance and oil resistance, and reduced compression set, which are unexpected from the conventional nitrile group-containing copolymer rubbers.

The process for producing rubber (A) is not particularly limited, but, it is expedient and preferable to adopt a method wherein monomer (1), monomer (2) and monomer (3) are copolymerized, and, apart of the carbon-carbon unsaturated bonds in the main chain of monomer units (c) in the thus-produced copolymer is hydrogenated to thereby convert to monomer units (d).

To obtain the intended compositional distribution width of rubber (A), suitable polymerization conditions are preferably determined by previous experiments. More specifically previous experiments are carried out in a manner such that the amounts of the respective monomers in a polymerization liquid are measured preferably at every increase in conversion of 1 to 5% by weight, more preferably 2 to 4% by weight during the progress of polymerization whereby the contents of the respective monomer units in minute portions of the copolymer are determined. The examination of the polymerization conditions can be carried by simulation using a computer, and the results can be confirmed by experiments.

The copolymer before hydrogenation does not contain monomer units (d), but, the compositional distribution width of monomer units (c) in the copolymer before hydrogenation is substantially equal to the compositional distribution width of the sum of compositional distribution width of the sum of monomer units (c) and monomer units (d).

The polymerization conditions adopted for obtaining a copolymer rubber (A) having the intended compositional distribution width are not particularly limited. However, the respective monomers are preferably additionally incorporated midway in the progress of polymerization. The time of additional incorporation of monomers and the amounts of monomers additionally incorporated should preferably be determined. The time of additional incorporation of monomers can be determined, for example, depending upon the conversion of polymerization.

The other polymerization conditions such as, for example, a polymerization solvent, a concentration of polymerization liquid, kind and amount of a polymerization initiator, a polymerization temperature, polymerization conversion at the termination of polymerization, kind and amount of a hydrogenation catalyst, and a hydrogenation temperature can be determined by the conventional procedures.

The metal salt of an ethylenically unsaturated carboxylic acid (B), used in the present invention, is a salt of metal with an ethylenically unsaturated carboxylic acid. The ethylenically unsaturated carboxylic acid has at least univalent free carboxyl group, and includes, for example, an unsaturated monocarboxylic acid, an unsaturated dicarboxylic acid, and a monoester of an unsaturated dicarboxylic acid. As specific examples of the ethylenically unsaturated carboxylic acid, there can be mentioned unsaturated monocarboxylic acids such as acrylic acid and methacrylic acid, unsaturated dicarboxylic acids such as maleic acid, fumaric acid and itaconic acid, and monoesters of unsaturated dicarboxylic acid such as monomethyl maleate, monoethyl maleate, monomethyl itaconate and monoethyl itaconate. Of these, ethylenically unsaturated carboxylic acids having no ester group are preferable. Unsaturated monocarboxylic acids and unsaturated dicarboxylic acids are more preferable. Unsaturated monocarboxylic acids are especially preferable because the resulting vulcanizate has excellent strengths

The metal for forming the salt together with an ethylenically unsaturated carboxylic acid is not particularly limited, but preferably includes. zinc, magnesium, calcium, barium, titanium, chromium, iron, cobalt, nickel, aluminum, tin and lead. Zinc, magnesium, calcium and aluminum are more preferable. Divalent metals, more specifically zinc and magnesium, are especially preferable.

As specific examples of the metal salt (B) of an ethylenically unsaturated carboxylic acid, there can be mentioned zinc dimethacrylate and zinc diacrylate. Zinc methacrylate is especially preferable in view of a rubber composition having improved processability.

The metal salt of an ethylenically unsaturated carboxylic acid can be incorporated in the form of a metal salt together with other ingredients to form a rubber composition. Alternatively an ethylenically unsaturated carboxylic acid, and an oxide, hydroxide or carbonate salt of the above-mentioned metal can be incorporated in combination, together with other ingredients, and, the carboxylic acid and the metal oxide, hydroxide or carbonate are reached with each other to form a metal salt of an ethylenically unsaturated carboxylic acid during kneading these ingredients.

The amount of the metal salt (B) of an ethylnically unsaturated carboxylic acid is not particularly limited, but is preferably in the range of 3 to 200 parts by weight, more preferably 5 to 150 parts by weight and especially preferably 10 to 100 parts by weight, based on 100 parts by weight of rubber (A). When the amount of the metal salt (B) of an ethylenically unsaturated carboxylic acid is too small, the resulting vulcanizate has poor strengths. In contrast, when the metal salt (B) is too large, the vulcanizate has a poor elongation.

The organic peroxide (C) used in the present invention has a function of vulcanizing rubber (A) . The organic peroxide (C) includes, for example, dialkyl peroxides, diacyl peroxides and peroxyesters. Of these, dialkyl peroxides are preferable. As specific examples of the organic peroxides (C), there can be mentioned dialkyl peroxides such as dicumyl peroxide, di-t-butyl peroxide, 2,5-dimethyl-2,5-di(t-butylperoxy)-3-hexyne, 2,5-dimethyl-2,5-Bi(t-butylperoxy)hexane and 1,3-bis(t-butylperoxyisopropyl)benzene; diacyl peroxides such as benzoyl peroxide and isobutyryl peroxide; and peroxy esters such as 2,5-dimethyl-2,5-bis(benzoylperoxy)hexane and t-butylperoxyisopropyl carbonate.

The amount of organic peroxide (C) is preferably in the range of 0.5 to 10 parts by weight, more preferably 0.8 to 8 parts by weight and especially preferably 1 to 6 parts by weight, based on 100 parts by weight of rubber (A). When the amount of organic peroxide (C) is too small, the vulcanization density tends to be lowered and the resulting vulcanizate is liable to have a large compression set. In contrast, when the amount of organic peroxide (C) is too large, the resulting vulcanizate is liable to have a poor rubber elasticity. Organic peroxide (C) may be added in the form of a dispersion in, for example, clay, calcium carbonate or silica to give a rubber composition having enhanced processability.

Organic peroxide (C) is preferably used in combination with a vulcanization aid, and, as specific examples of the vulcanization aid, there can be mentioned triallyl cyanurate, triallyl isocyanurate, trimethylolpropane trimethacrylate and N,N'-m-phenylene bismaleimide. The vulcanization aid may be added in the form of a dispersion in, for example, clay, calcium carbonate or silica to give a rubber composition having enhanced processability. The amount of vulcanization aid is not particularly limited and can be appropriately determined depending upon the particular use of a vulcanizate, the properties required for a vulcanizate, the kind of organic peroxide, and the kind of vulcanization aid.

Ingredients generally used in rubbers can be incorporated in the rubber composition of the present invention, provided that the effect of the present invention can be substantially obtained. The ingredient includes, for example, reinforcing agents such as carbon black and silica, fillers such as calcium carbonate, clay, talc and calcium silicate, antioxidants, vulcanization retarders, plasticizers and pigments. Rubbers other than rubber (A), or resins, can be incorporated in the rubber composition of the present invention, provided that the effect of the present invention can be substantially obtained.

The rubber composition of the present invention is a mixture of rubber (A), metal salt of (B) an ethylenically unsaturated carboxylic acid, organic peroxide (C) and optional other ingredients. The procedures by which the rubber composition is prepared is not particularly limited, and procedures generally adopted for rubber compositions can be adopted. For example, a procedure wherein the above-mentioned ingredients are kneaded together by using a closed type mixer or an open roll. When organic peroxide (C) and a vulcanization aid are added, the rubber composition is generally maintained at a temperature lower than the vulcanization initiation temperature upon and after the addition of organic peroxide (C) and the vulcanization aid so as to avoid premature vulcanization during kneading. Usually a procedure is adopted wherein ingredients other than organic peroxide (C) and the vulcanization aid are mixed together, and thereafter, organic peroxide (C) and the vulcanization aid are added at a temperature lower than the vulcanization initiation temperature, followed by kneading.

The vulcanzate of the present invention is obtained by vulcanizing the above-mentioned rubber composition of the present invention. The method of vulcanization is not particularly limited, and usually heating is conducted. The vulcanization temperature is preferably in the range of 100 to 200°C, more preferably 130 to 180°C. When the vulcanization temperature is too low, a substantially long time is required for vulcanization or vulcanization density of the vulcanizate is liable to be reduced. In contrast, when the vulcanization temperature is too high, moldability is reduced and defective moldings tend to be occasionally produced. The vulcanization time varies depending upon the particular vulcanization method, vulcanization temperature and shape of a vulcanizate, and an adequate vulcanization density and enhanced efficiency for production of a vulcanizate can be obtained at a vulcanization time preferably in the range of at least one minute and not longer than one hour.

The heating for vulcanization can be effected by a procedure appropriately chosen from those which are generally adopted for vulcanization of rubber, such as press heating, steam heating, oven heating and hot-air heating.

The invention will be described by the following examples and comparative examples. In these examples, parts and % are by weight unless otherwise specified.

Properties of rubbers and vulcanizates were evaluated by the following methods.

### (1) Glass Transition Temperature of Rubber (A)

The extrapolated glass transition initiation temperature (Tig) and the extrapolated glass transition ending temperature (Teg) of rubber (A) were determined by heat f lux differential scanning calorimetry according to JIS K7121. In this measurement, the rate of heating was changed from 20°C/min to 10°C/min to enhance the degree of accuracy for measurement. The difference ΔT) as stipulated in the present invention is a difference between Tig and Teg.

### (2) Number Average Molecular Weight and Molecular Weight Distribution of Rubber (A)

The number average molecular weight (Mn) and molecular weight distribution (Mw/Mn) of rubber (A) were determined by gel permeation chromatography using tetrahydrofuran as a solvent and expressed in terms of standard polystyrene.

### (3) Dry Properties of Vulcanizate

A rubber composition was vulcanized at 170°C for 20 minutes under a press pressure of 10 MPa to prepare a vulcanizate sheet having a thickness of 2 mm. The sheet was out by a #3 dumbbell die to prepare a specimen. Tensile strength, 100% tensile stress and elongation of the specimen were measured according to Japanese Industrial Standard (JIS) K6251, and hardness of the specimen was measured by a durometer hardness tester type A according to JIS K6253.

### (4) Heating in Oil Test of Vulcanizate

A specimen prepared by the same procedure as mentioned in (3) above was immersed for 168 hours in lubricant oil "IRM 903" maintained at 150°C according to JIS K6258. The volume of specimen was measured before and after the immersion in hot oil, and the test results were expressed by the change (%) in volume.

### (5) Cold Resistance of Vulcanizate

Twist angle of the specimen prepared by the same procedure as mentioned in (3) above was measured by a Gehman tortion tester according to JIS K6261. The cold resistance was expressed in terms of a temperature (T₁₀) at which the twist angle is ten times of the twist angle as measured at 23°C.

### (6) Compression Set of Vulcanizate

A vulcanizable rubber composition was subjected to press-vulcanization at 170°C for 25 minutes under a press pressure of 10 MPa by using a mold having a diameter of 29 mm and a thickness of 12.5 mm to prepare a cyclindrical specimen. Compression set of the specimen was evaluated according to JIS K6262 wherein the measurement was carried out after the specimen was 25% pressed and maintained in the 25% pressed state at 150°C for 70 hours and also for 168 hours.

### Example 1

A reactor was charged with 2 parts of potassium oleate as an emulsifier, 0.1 part of potassium phosphate as a stabilizer, and 150 parts of water. Further, 20 parts of acrylonitrile as monomer (1), 15 parts of butyl acrylate as monomer (2), 35 parts of 1,3-butadiene as monomer (3) and 0.45 part of t-dodecyl mercaptan as a molecular weight modifier were added. Emulsion polymerization was initiated at 10°C in the presence of 0.015 part of ferrous sulfate as an activator and 0.05 part of p-menthane hydroperoxide as a polymerization initiator. When the polymerization conversion reached 60%, 10 parts of acrylonitrile, 10 parts of butyl acrylate and 10 parts of 1,3-butadiene were added. When the polymerization conversion reached 85%, 0.2 part of hydroxylamine sulfate was added per 100 parts of the monomers to terminate the polymerization. At every 3% increase of polymerization conversion, a minute amount of polymerization liquid was taken during the polymerization to measure the contents of respective monomer units in the minute portion of the copolymer. After the termination of polymerization, the polymerization liquid was heated and steam-distilled at 70°C under a reduced pressure to recover unreacted monomers. Then 2 parts of an alkylated phenol as antioxidant was added to obtain a copolymer latex.

3,000 parts of an aqueous coagulating solution containing 3 parts of calcium chloride as a coagulant was maintained at 50°C, and, into this coagulating solution, the above-mentioned copolymer latex was dropwise added whereby the copolymer latex was coagulated to yield a crumb. The crumb was washed with water and then dried at 50°C under a reduced pressure.

The thus-obtained copolymer was dissolved in methyl isobutyl ketone, an6"then subjected to hydrogenation using a palladium/silica catalyst in a pressure-resistant vessel to prepare rubber (A).

The contents of the respective monomer units in the entire copolymer rubber, the maximum value and the minimum value in the contents of the respective monomer units in minute portions of the copolymer rubber, compositional distribution width, and properties of a vulcanizate are shown in Table 1 and Table 2. These contents of the respective monomer units were determined by ¹H-NMR analysis, iodine value measurement, and nitrogen-content measurement according to the semi-micro Kjeldahl method. It was confirmed that the contents of the monomer units in the copolymer rubber were the same as the differenece between the amounts of the monomers used and the amounts of unreacted monomers

To 100 parts of the obtained rubber (A), 40 parts of zinc dimethacrylate as metal salt (B) of an ethylenically unsaturated carboxylic acid, 15 parts of #1 zinc oxide, 35 parts of SRF carbon black ("Asahi #50" available from Asahi Carbon K.K.), 15 parts of polyether-ester plasticizer ("Adekasizer RS-700" available from Asahi Dehka Co., Ltd.), 2 parts of substituted diphenylamine ( "Naugard 445" antioxidant available from Uniroyal Co.), 2 parts of 2-mercaptobenzothiazole zinc salt as antioxidant, and 8 parts of 40% 1,3-bis(t-butylperoxyisopropyl)benzene ("Valcup 40KE" available from Hercules Co.) as organic peroxide (C) were added, and the mixture was kneaded together to prepare a rubber composition. The rubber composition was vulcanized to give a vulcanizate specimen. The above-mentioned properties (3) through (6) of the specimen were evaluated. The results are shown in Table 3.

### Examples 2-5, Comparative Examples 1-9

The procedures described In Example 1 were repeated wherein the amounts of monomers initially charged and monomers additionally incorporated in the midway of polymerization were varied as shown in Table 1 and Table 2 to prepare rubber compositions comprising rubber (A), and vulcanizates from the rubber compositions. Properties of rubber (A) and the vulcanizates were evaluated. The results are shown in Tables 1, 2, 3 and 4. In comparative Examples 1 through 9, the additional incorporation of monomers in the midway of polymerization was not conducted.

**Table 1**

| | Example | | | | | Comp. Example | |
|---|---|---|---|---|---|---|---|
| | 1 | 2 | 3 | 4 | 5 | 1 | 2 |
| Amounts of monomers used for polymerization | | | | | | | |
| Acrylonitrile | | | | | | | |
| Initially charged (wt. parts) | 19 | 19 | 9 | 9 | 9 | 29 | 29 |
| Added midway (wt. parts) | 10 | 10 | 10 | 10 | 10 | 0 | 0 |

| Butyl acrylate | | | | | | | |
|---|---|---|---|---|---|---|---|
| Initially charged (wt. parts) | 18 | 28 | 28 | 13 | 43 | 28 | 38 |
| Added midway (wt. parts) | 10 | 10 | 10 | 10 | 10 | 0 | 0 |

| 1,3-Butadiene | | | | | | | |
|---|---|---|---|---|---|---|---|
| Initially charged (wt. parts) | 33 | 23 | 33 | 48 | 18 | 43 | 33 |
| Added midway (wt. parts) | 10 | 10 | 10 | 10 | 10 | 0 | 0 |

| Rubber (A) | | | | | | | |
|---|---|---|---|---|---|---|---|
| Acrylonitrile units (a) | | | | | | | |
| Content (wt. %) | 30 | 30 | 20 | 20 | 20 | 30 | 30 |
| Maximum content in minute portions (wt. %) | 30.7 | 30.9 | 21.7 | 20.4 | 20.7 | 36.5 | 33.8 |
| Minimum content in minute portions (wt. %) | 28.3 | 28.2 | 20.3 | 18.6 | 19.3 | 27.5 | 24.2 |
| Compositional distribution width (wt. %) | 8 | 9 | 9 | 9 | 7 | 26 | 34 |

| Butyl acrylate units (b) | | | | | | | |
|---|---|---|---|---|---|---|---|
| Content (wt. %) | 25 | 35 | 35 | 20 | 50 | 25 | 35 |
| Maximum content in minute portions (wt. %) | 25.5 | 37.6 | 36.1 | 21.9 | 51.8 | 27.3 | 43.0 |
| Minimum content in minute portions (wt. %) | 23.5 | 34.4 | 32.9 | 20.1 | 48.3 | 20.8 | 31.1 |
| Compositional distribution width (wt. %) | 8 | 9 | 9 | 9 | 7 | 26 | 34 |

| Rubber (A) | | | | | | | |
|---|---|---|---|---|---|---|---|
| 1,3-butadiene units (c) | | | | | | | |
| Content (wt. %) | 5 | 5 | 5 | 5 | 5 | 5 | 5 |
| Saturated butadiene units (d) | | | | | | | |
| Content (wt. %) | 40 | 30 | 40 | 55 | 25 | 40 | 30 |

| Sum of units (c) + units (d) | | | | | | | |
|---|---|---|---|---|---|---|---|
| Content (wt. %) | 45 | 35 | 45 | 60 | 30 | 45 | 35 |
| Maximum content in minute portions (wt. %) | 47.6 | 35.6 | 46.1 | 61.3 | 31.0 | 49.4 | 38.0 |
| Minimum content in minute portions (wt. %) | 44.4 | 33.5 | 42.9 | 57.7 | 28.9 | 38.6 | 30.0 |
| Compositional distribution width (wt. %) | 7 | 6 | 7 | 6 | 7 | 24 | 23 |
| Ratio of units (d)/[units (c) + units (d)] (wt. %) | 88.9 | 85.7 | 88.9 | 91.7 | 83.3 | 88.9 | 85.7 |

| Test (1) Ratio of units (d)/[units (c) + units (d)] (wt. %) | | | | | | | |
|---|---|---|---|---|---|---|---|
| Tig (°C) | -39.1 | -39.2 | -41.3 | -40.9 | -38.2 | -39.4 | -39.7 |
| Teg (°C) | -31.3 | -31.1 | -33.3 | -33.1 | -30.1 | -26.7 | -26.7 |
| ΔT (°C) | 7.8 | 8.1 | 8.0 | 7.8 | 8.1 | 12.7 | 13.0 |

| Test (2) | | | | | | | |
|---|---|---|---|---|---|---|---|
| Number average molecular weight × 10⁻³ | 90 | 88 | 92 | 90 | 91 | 91 | 93 |
| Molecular weight distribution (Mw/Mn) | 5.9. | 6.2 | 6.1 | 6.3 | 6.1 | 9.9 | 10.5 |

**Table 2**

| | Comparative Examples | | | | | | |
|---|---|---|---|---|---|---|---|
| | 3 | 4 | 5 | 6 | 7 | 8 | 9 |
| Amounts of monomers used for polymerization | | | | | | | |
| Acrylonitrile | | | | | | | |
| Initially charged (wt. parts) | 19 | 19 | 19 | 4 | 44 | 19 | 35 |
| Added midway (wt. parts) | 0 | 0 | 0 | 0 | 0 | 0 | 0 |

| Butyl acrylate | | | | | | | |
|---|---|---|---|---|---|---|---|
| Initially charged (wt. parts) | 38 | 23 | 53 | 38 | 38 | 8 | 0 |
| Added midway. (wt. parts) | 0 | 0 | 0 | 0 | 0 | 0 | 0 |
| 1.3-Butadiene | | | | | | | |
| Initially charged (wt. parts) | 43 | 58 | 28 | 58 | 18 | 73 | 65 |
| Added midway (wt. parts) | 0 | 0 | 0 | 0 | 0 | 0 | 0 |

| Rubber (A) | | | | | | | |
|---|---|---|---|---|---|---|---|
| Acrylonitrile units (a) | | | | | | | |
| Content (wt. %) | 20 | 20 | 20 | 5 | 45 | 20 | 35 |
| Maximum content in minute portions (wt. %) | 24.8 | 20.7 | 21.7 | 5.1 | 54.9 | 22.7 | 40.6 |
| Minimum content in minute portions (wt. %) | 19.2 | 15.3 | 16.3 | 4.6 | 39.1 | 17.3 | 29.4 |
| Compositional distribution width (wt. %) | 28 | 27 | 27 | 22 | 35 | 27 | 32 |

| Butyl acrylate units (b) | | | | | | | |
|---|---|---|---|---|---|---|---|
| Content (wt. %) | 35 | 20 | 50 | 35 | 35 | 5 | 0 |
| Maximum content in minute portions (wt. %) | 39.4 | 24.3 | 55.0 | 42.8 | 39.6 | 5.6 | - |
| Minimum content in minute portions (wt.%) | 28.6 | 19.7 | 43.0 | 31.2 | 28.4 | 4.5 | - |
| Compositional distribution width (wt. %) | 31 | 23 | 24 | 33 | 32 | 22 | - |

| Rubber (A) | | | | | | | |
|---|---|---|---|---|---|---|---|
| 1,3-butadiene units (c) | | | | | | | |
| Content (wt. %) | 5 | 5 | 5 | 5 | 5 | 5 | 5 |

| Saturated butadiene units (d) | | | | | | | |
|---|---|---|---|---|---|---|---|
| Content (wt. %) | 40 | 55 | 25 | 55 | 15 | 70 | 60 |

| sum of units (c) + units (d) | | | | | | | |
|---|---|---|---|---|---|---|---|
| Content (wt. %) | 45 | 60 | 30 | 60 | 20 | 75 | 65 |
| Maximum content in minute portions (wt. %) wt. % | 49.2 | 63.8 | 35.9 | 64.0 | 21.5 | 78.1 | 70.6 |
| Minimum content in minute portions (wt.%) | 38.8 | 48.2 | 28.1 | 48.2 | 16.5 | 57.9 | 59.4 |
| Compositional distribution width (wt. %) | 23 | 26 | 26 | 23 | 25 | 27 | 17 |
| Ratio of units (d)/[units (c) + units (d)] (wt. %) | 88.9 | 91.7 | 83.3 | 91.7 | 75 | 93.3 | 92.3 |

| Test (1) Ratio of units (d)/[units (c) + units (d)] (wt.%) | | | | | | | |
|---|---|---|---|---|---|---|---|
| Tig (°C) | -41.9 | -42.3 | -38.4 | -45.8 | -35.5 | -43.6 | -31.9 |
| Teg (°G) | -29.0 | -29.8 | -25.6 | -32.7 | -22.7 | -30.4 | -19.2 |
| ΔT (°C) | 12.9 | 12.5 | 12.8 | 13.1 | 12.8 | 13.2 | 12.7 |

| Test (2) | | | | | | | |
|---|---|---|---|---|---|---|---|
| Number average molecular weight × 10⁻³ | 89 | 90 | 93 | 90 | 94 | 92 | 90 |
| Molecular weight distribution (Mw/Mn) | 10.3 | 9.8 | 10.5 | 10.5 | 10.0 | 10.7 | 9.8 |

**Table 3**

| | Example | | | | | Comp. Ex. | |
|---|---|---|---|---|---|---|---|
| | 1 | 2 | 3 | 4 | 5 | 1 | 2 |
| (3) Physical Properties of Vulcanizate | | | | | | | |
| Tensile strength (MPa) | 20.7 | 17.9 | 18.6 | 20.4 | 17.1 | 18.2 | 15.0 |
| Elongation (%) | 450 | 400 | 440 | 440 | 470 | 440 | 390 |
| 100% Tensile stress (MPa) | 5.0 | 4.8 | 4.4 | 4.3 | 4.0 | 4.6 | 4.4 |
| Hardness | 71 | 71 | 70 | 70 | 69 | 70 | 70 |

| (4) Heat Load in Oil Test of Vulcanizate. | | | | | | | |
|---|---|---|---|---|---|---|---|
| Volume change (%) | 13 | 12 | 27 | 32 | 26 | 17 | 16 |

| (5) Cold Resistance Test of Vulcanizate | | | | | | | |
|---|---|---|---|---|---|---|---|
| Tio (°C) | -40 | -40 | -42 | -42 | -39 | -37 | -38 |

| (6) Compression Set of Vulcanizate | | | | | | | |
|---|---|---|---|---|---|---|---|
| Load, 150 °C, 70H (%) | 65 | 72 | 71 | 67 | 75 | 75 | 82 |
| Load, 150 °C, 168H (%) | 71 | 79 | 78 | 74 | 82 | 84 | 91 |

**Table 4**

| | Comparative Example | | | | | | |
|---|---|---|---|---|---|---|---|
| | 3 | 4 | 5 | 6 | 7 | 8 | 9 |
| (3) Physical Properties of Vulcanizate | | | | | | | |
| Tensile strength (MPa) | 15.8 | 17.5 | 14.3 | 17.9 | 15.8 | 23.6 | 25.3 |
| Elongation (%) | 430 | 430 | 470 | 480 | 380 | 460 | 490 |
| 100% Tensile stress (MPa) | 4.0 | 3.9 | 3.6 | 3.6 | 5.2 | 4.9 | 5.0 |
| Hardness | 69 | 69 | 68 | 70 | 72 | 73 | 74 |

| (4) Heat Load in Oil Test of Vulcanizate | | | | | | | |
|---|---|---|---|---|---|---|---|
| Volume change (%) | 31 | 36 | 30 | 52 | 4 | 43 | 9 |

| (5) Cold Resistance Test of Vulcanizate | | | | | | | |
|---|---|---|---|---|---|---|---|
| T10 (°C) | -40 | -39 | -36 | -42 | -35 | -36 | -33 |

| (6) Compression Set of Vulcanizate | | | | | | | |
|---|---|---|---|---|---|---|---|
| Load, 150 °C, 70H (%) | 81 | 77 | 86 | 78 | 82 | 73 | 60 |
| Load. 150 °C, 168H (%) | 90 | 86 | 95 | 87 | 91 | 82 | 69 |

As seen from Comparative examples 1 to 5, a rubber composition comprising a copolymer rubber having a difference between the extrapolated glass transition initiation temperature (Tig) and the extrapolated glass transition ending temperature (Teg) of larger than 10°C, and having a compositional distribution width of each of the monomer units is large, gives a vulcanizate having a large compression set.

As seen from Comparative Examples 6 to 9, a rubber composition comprising a copolymer rubber having a monomer unit composition not satisfying the requirement of the present invention gives a vulcanizate which has poor cold resistance and/or poor oil resistance.

In contrast, as seen from Examples 1 to 5, a rubber composition comprising a copolymer rubber (A), a metal salt (B) of an ethylenically unsaturated carboxylic acid and an organic peroxide (C) gives a vulcanizate having excellent cold resistance and oil resistance, and, as compared with those of comparative examples having similar monomer compositions, gives a vulcanizate exhibiting a reduced compression set.

### Industrial Applicability

The vulvanizate of the present invention has excellent cold resistance and oil resistance, and exhibits a reduced compression set. In view of these beneficial properties, the vulcanizate can be used as rubber components including, for example, belts such as toothed belts and V ribbed belts, seals such as packings and gaskets, boots, diaphragms, hoses and rolls.

## Claims

1. A rubber composition comprising (A) a nitrile group-containing copolymer rubber, (B) a metal salt of an ethylenically unsaturated carboxylic acid and (C) an organic peroxide, wherein the nitrile group-containing copolymer rubber (A) comprises 10 to 40% by weight of (a) α,β-ethylenically unsaturated nitrile monomer units, 10 to 60% by weight of (b) α,β-ethylenically unsaturated carboxylic acid ester monomer units, 0.01 to 56% by weight of (c) conjugated diene monomer units, and 14 to 69.99% by weight of (d) saturated conjugated diene monomer units; the sum of the monomer units (c) and the monomer units (d) is 20 to 70% by weight, and the ratio of the monomer units (d) to the sum of the monomer units (c) and the monomer units (d) is at least 70% by weight; the difference between the extrapolated glass transition initiation temperature (Tig) and the extrapolated glass transition ending temperature (Teg) as measured on the copolymer rubber (A) by differential scanning calorimetry is not larger than 10°C.

2. The rubber composition according to claim 1, wherein compositional distribution width of each of (a) α,β -ethylenically unsaturated nitrile monomer units, (b) α, β -ethylenically unsaturated carboxylic acid ester monomer units, and (c) conjugated diene monomer units plus (d) saturated conjugated diene monomer units in the nitrile group-containing copolymer rubber (A) is not larger than 20% by weight.

3. The rubber composition according to claim 1, wherein the metal salt (B) of an ethylenically unsaturated carboxylic acid is a metal salt of an ethylenically unsaturated carboxylic acid having no ester group.

4. The rubber composition according to claim 1, wherein the metal salt (B) of an ethylenically unsaturated carboxylic acid is a divalent metal salt of an ethylenically unsaturated carboxylic acid.

5. The rubber composition according to claim 1, wherein the organic peroxide (C) is selected from dialkyl peroxides

6. A vulcanizate obtained by vulcanizing the rubber composition as claimed in claim 1.

## Patentansprüche

1. Kautschukzusammensetzung, umfassend (A) einen nitrilgruppenenthaltenden Copolymerkautschuk, (B) ein Metallsalz einer ethylenisch ungesättigten Carbonsäure und (C) ein organisches Peroxid, wobei der nitrilgruppenenthaltende Copolymerkautschuk (A) 10 bis 40 Gew. -% (a) α, β-ethylenisch ungesättigte Nitrilmonomereinheiten, 10 bis 60 Gew. -% (b) α, β-ethylenisch ungesättigte Carbonsäureestermonomereinheiten, 0,01 bis 56 Gew.-% (c) konjugierte Dienmonomereinheiten und 14 bis 69,99 Gew. -% (d) gesättigte konjugierte Dienmonomereinheiten umfasst; die Summe der Monomereinheiten (c) und der Monomereinheiten (d) beträgt 20 bis 70 Gew.-% und das Verhältnis der Monomereinheiten (d) zur Summe der Monomereinheiten (c) und der Monomereinheiten (d) beträgt mindestens 70 Gew.-%; der Unterschied zwischen der extrapolierten Glasübergangsanfangstemperatur (Tig) und der extrapolierten Glasübergangsendtemperatur (Teg) wie beim Copolymerkautschuk (A) durch Differential-Scanning-Kalorimetrie gemessen ist nicht größer als 10°C.

2. Kautschukzusammensetzung nach Anspruch 1, wobei die zusammensetzungsmäßige Verteilungsbreite von jedem der (a) α,β-ethylenisch ungesättigten Nitrilmonomereinheiten, (b) α,β-ethylenisch ungesättigten Carbonsäureestermonomereinheiten und (c) konjugierten Dienmonomereinheiten plus (d) gesättigten konjugierten Dienmonomereinheiten in dem nitrilgruppenenthaltenden Copolymerkautschuk (A) nicht größer als 20 Gew.-% ist.

3. Kautschukzusammensetzung nach Anspruch 1, wobei das Metallsalz (B) einer ethylenisch ungesättigten Carbonsäure ein Metallsalz einer ethylenisch ungesättigten Carbonsäure ohne Estergruppe ist.

4. Kautschukzusammensetzung nach Anspruch 1, wobei das Metallsalz (B) einer ethylenisch ungesättigten Carbonsäure ein divalentes Metallsalz einer ethylenisch ungesättigten Carbonsäure ist.

5. Kautschukzusammensetzung nach Anspruch 1, wobei das organische Peroxid (C) ausgewählt ist aus Dialkylperoxiden.

6. Vulkanisat, erhalten durch Vulkanisieren der in Anspruch 1 beanspruchten Kautschukzusammensetzung.

## Revendications

1. Composition de caoutchouc comprenant (A) un caoutchouc copolymère contenant un groupe nitrile, (B) un sel métallique d'un acide carboxylique à insaturation éthylénique et (c) un peroxyde organique, dans laquelle le caoutchouc de copolymère contenant un groupe nitrile (A) comprend de 10 à 40 % en poids de (a) motifs monomères de nitrile à insaturation α,β-éthylénique, de 10 à 60 % en poids de (b) motifs monomères d'ester d'acide carboxylique à insaturation α, β-éthylénique, de 0,01 à 56 % en poids de (c) motifs monomères de diène conjugué, et 14 à 69,99 % en poids de (d) motifs monomères de diène conjugué saturé ; la somme des motifs monomères (c) et des motifs monomères (d) est de 20 à 70 % en poids, et le rapport des motifs monomères (d) à la somme des motifs monomères (c) et des motifs monomères (d) est au moins de 70 % en poids ; la différence entre la température initiale de transition vitreuse extrapolée (Tig) et la température finale de transition vitreuse extrapolée (Teg) comme mesuré sur le caoutchouc polymère (A) par calorimétrie à compensation de puissance n'est pas supérieure à 10 °C.

2. Composition de caoutchouc selon la revendication 1, dans laquelle la largeur de distribution de la composition de chacun des (a) motifs monomères de nitrile à insaturation α, β-éthylénique, (b) motifs monomères d'ester d'acide carboxylique à insaturation α, β-éthylénique, et (c) motifs monomères de diène conjugué, plus (d) motifs monomères de diène conjugué saturé dans un caoutchouc copolymère contenant un groupe nitrile (A) n' est pas supérieure à 20 % en poids.

3. Composition de caoutchouc selon la revendication 1, dans laquelle le sel métallique (B) d'un acide carboxylique à insaturation éthylénique est un sel métallique d'un acide carboxylique à insaturation éthylénique n'ayant pas de groupe ester.

4. Composition de caoutchouc selon la revendication 1, dans laquelle le sel métallique (B) d'un acide carboxylique à insaturation éthylénique est un sel métallique divalent d'un acide carboxylique à insaturation éthylénique.

5. Composition de caoutchouc selon la revendication 1, dans laquelle le peroxyde organique (C) est choisi parmi les peroxydes dialkyliques.

6. Vulcanisat obtenu par vulcanisation de la composition de caoutchouc selon la revendication 1.
